# EUROPEAN PATENT APPLICATION

(11) **EP 1 990 701 A1**
(43) Date of publication of application: **12.11.2008**
(21) Application number: 07107644.2
(22) Date of filing: 07.05.2007
(51) Int. Cl.: G06F 1/16, G06F 3/048, G06F 3/033

(54) **Dual function operation input keys for portable device and operating method therefor**

(71) Applicant: Giga-Byte Communications, Inc., Hsin-Tien Taipei County (TW); Giga-Byte Technology Co., Ltd., Hsin-Tien Taipei County (TW)
(72) Inventor: Huang, Jeng-Wen, TAIPEI (TW); Tsai, Tsung-Ting, TAIPEI COUNTY (TW)
(74) Representative: Loisel, Bertrand

(57) **Abstract**

A dual function operation input key module which applies to portable devices and an operating method therefor provide a using status induction switch which is selectively activated actively or passively, and perform a corresponding operation according to the first using status induction or the second using status induction based on the using status induction switch.

## Description

### BACKGROUND

### Field of the Invention

The invention relates to input keys which apply to a portable device, and more particularly to dual function operation input keys which apply to a portable device and operating method therefor.

### Related Art

Potable devices, such as laptops, PDAs, cell phones, or translator machines are all disposed a key set for inputting an operator's instruction. Recently, a capacitive sensing technology is commonly used in all kinds of portable devices for input, where uses electric fields which are produced by static electricity existing on human fingers to touch the input key area to generate signal by the positive-negative electricity inducement effect. This technology can not only replace numerous of mechanic keys and controllers but also eliminate operating abrasion caused by the external environment. Moreover, this technology can allow the input key area of the portable device to have a seamless appearance.

Up to the present, the trend of the development of the portable device is continually moving towards miniaturization. So, while more functions are added into a single portable device by embodied software, how to perform dual functions by just one physical device (input interface or display device) without connecting an extra input interface or an extra display device becomes an important topic.

### SUMMARY

According to the foregoing demands, a dual function operation input key module which applies to a portable device and operating method therefor are provided.

The dual function operation input key module includes: an input key area, which is configured with a capacitive touch sensor; a dual function operation input setting unit to define at least one location signal of a first using status induction of the input key area, and a second using status induction; and a switch to provide a using status induction switch which is selectively activated actively or passively.

The operating method of dual function operation input keys which apply to portable devices includes the following steps: providing an input key area which is configured with a capacitive touch sensor; defining at least one location signal of a first using status induction of the input key area, and a second using status induction; providing a using status induction switch which is selectively activated actively or passively; and performing a corresponding operation according to the first using status induction or the second using status induction based on the using status induction switch.

The input key area further includes a plurality of keys, which are used for selectively switching the function setting of the keys by a key setting switch unit. The first using status induction defines the input area into a plurality of capacitive sensing blocks, where each capacitive sensing block corresponds to one location signal. The second using status induction defines the input area as a mouse touch pad. The using status induction switch being actively activated is performed though the closing and opening of a slide case panel. The using status induction being passively activated is performed through an on-and-off of a switch.

### BRIEF DESCRIPTION OF THE DRAWINGS

The present invention will become more fully understood from the detailed description given below, which is for illustration only and thus is not limitative of the present invention, wherein:
FIG.1 is a schematic diagram showing a first using status induction of the dual function operation input key module, which applies to a portable device according to the invention;
FIG.2 is a schematic diagram showing a second using status induction of the dual function operation input key module, which applies to a portable device according to the invention;
FIG.3 is a block diagram showing a dual function operation input key module which applies to a portable device according to the invention; and
FIG.4 is a flow chart showing an operating method of the dual function operation input key area which applies to a portable device according to the invention.

### DETAILED DESCRIPTION

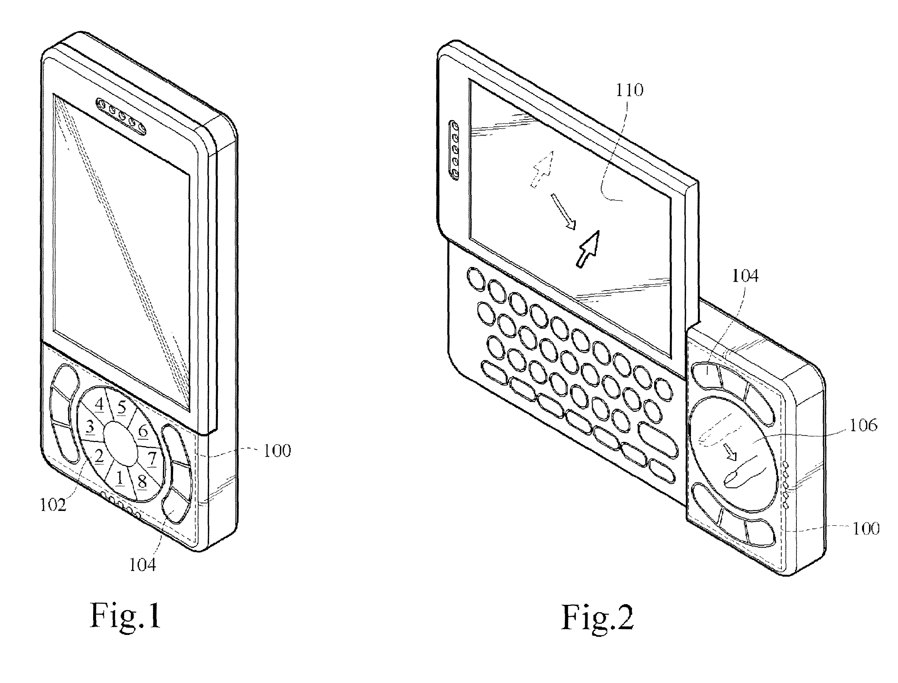

FIG.1 is a schematic diagram showing a first using status induction of the dual function operation input keys module, which applies to a portable device according to the invention. The input key area 100 of the portable device is a capacitive touch block 102, and can further include one or more keys 104 disposed thereon. The capacitive touch block 102 corresponds to every location signal (1 to 8), and each may have its own preset function key, which can be customized or defined by the user. In addition, the input key area 100 can be other types of keys except for the capacitive touch type, to increase its functionality.

FIG.2 is a schematic diagram showing the second using status induction of the dual function operation input keys module, which applies to a portable device according to the invention. The reason to develop this invention is, after considers more and more functions are added into a single portable device and the size of the device still need to be limited, a single input device may need to carry more differential functions than before. For example, the input interface on a portable device which is used for inputting data probably may have to be used to play games; therefore, an additional device like a mouse might be needed to connect with the device in order to achieve the same purpose.

Therefore, the invention provides a dual function operation input key module which applies to a portable device, where can provide a using status induction switch which is selectively activated actively or passively and can perform the corresponding operation according to the first using status induction or the second using status induction based on the using status induction switch, to achieve the multifunctional purpose within the limited numbers of input devices.

In FIG.2, the function definition of the input key area 100 can be changed from the function definition of capacitive touch block which corresponds to every location signal (1 to 8) (Please refer to FIG.1) to the function definition for the mouse touch pad 106 by sliding the slide case panel 110.

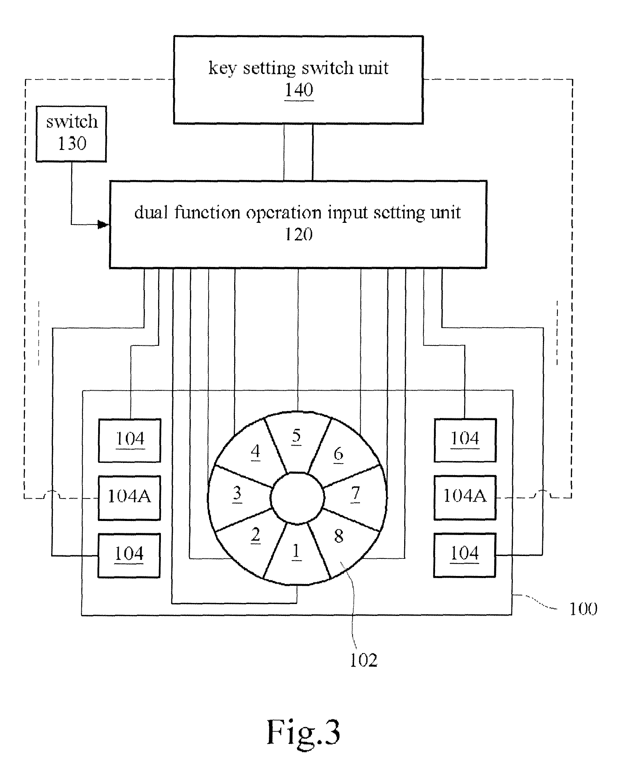

FIG.3 is a block diagram showing a dual function operation input key module which applies to a portable device according to the invention, which includes: an input key area 100, which is configured with a capacitive touch sensor (not shown in the figure; and the sensor is a conventional capacitive touch sensor, so it will not be necessary to describe it herein in detail); a dual function operation input setting unit 120 to define at least one location signal (1 to 8) of a first using status induction of the input key area 100, and a second using status induction; and a switch 130, which provides a using status induction switch which is selectively activated actively or passively.

The first using status induction is defined as the function definition of the capacitive touch block 102 which corresponds to every location signal (1 to 8), which is a block key design. The second using status induction is a function definition of a mouse touch pad 106 (This is shown in FIG.2.).

In practice, sometimes, other types of input technologies need to be considered. For example, some conventional keys 104 and 104A can be included, where their pin signals can be coupled to the dual function operation input setting unit 120 or the key function switch unit 104 to perform switch between different functional definition through the user's setting or the switch 130. The different functional definition switch depends on the real application of the portable device.

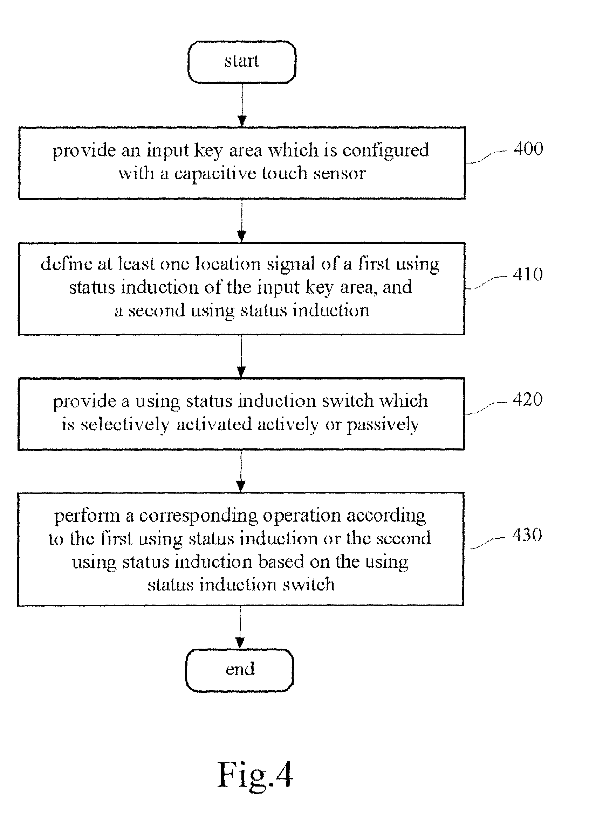

FIG.4 is a flow chart showing an operating method of the dual function operation input key area which applies to a portable device according to the invention, which includes the following steps: providing an input key area which is configured with a capacitive touch sensor (step 400); defining at least one location signal of a first using status induction of the input key area, and a second using status induction (step 410); providing a using status induction switch which is selectively activated actively or passively (step 420); and performing a corresponding operation according to the first using status induction or the second using status induction based on the using status induction switch (step 430).

The input key area further includes a plurality of keys, which are used for selectively switch the function setting of the keys by a key setting switch unit 140. The fist using status induction defines the input area into a plurality of capacitive sensing blocks, where each capacitive sensing block corresponds to the location signal. The second using status induction defines the input area as a mouse touch panel. The using status induction switch being actively activated performs the switch though the closing and opening of a slide case. The using status induction being passively activated performs the switch through an on-and-off of a switch.

While the illustrative embodiments of the invention have been set forth for the purpose of disclosure, modifications of the disclosed embodiments of the invention as well as other embodiments thereof may occur to those skilled in the art. Accordingly, the appended claims are intended to cover all embodiments, which do not depart from the spirit and scope of the invention.

## Claims

1. A dual function operation input key module which applies to a portable device, including:
an input key area, which is configured with a capacitive touch sensor;
a dual function operation input setting unit, which defines at least one location signal of a first using status induction of the input key area, and a second using status induction; and
a switch, providing a using status induction switch which is selectively activated actively or passively.

2. The dual function operation input key module of claim 1, wherein the input key area further includes a plurality of keys.

3. The dual function operation input key module of claim 2 further includes a key function switch unit to selectively switch function setting of the keys.

4. The dual function operation input key module of claim 1, wherein the first using status induction defines the input key area into a plurality of capacitive touch blocks.

5. The dual function operation input key module of claim 4, wherein each capacitive touch block corresponds to the location signal.

6. The dual function operation input key module of claim 1, wherein the second using status induction defines the input key area as a mouse touch pad.

7. The dual function operation input key module of claim 1, wherein the using status induction switch being actively activated is performed by an opening and closing of a slide case panel.

8. The dual function operation input key module of claim 1, wherein the using status induction switch being passively activated is performed by an on-and-off of a switch.

9. An operating method of a dual function operation input key which applies to a portable device, including:
providing an input key area which is configured with a capacitive touch sensor;
defining at least one location signal of a first using status induction of the input key area;
providing a using status induction switch which is selectively activated actively or passively; and
performing a corresponding operation according to the first using status induction or the second using status induction based on the using status induction switch.

10. The operating method of claim 9, wherein the input key area further includes a plurality of keys.

11. The operating method of claim 10 further includes a key function switch unit to selectively switch functional setting of the keys.

12. The operating method of claim 9, wherein the first using status induction defines the input key area into a plurality of capacitive touch blocks.

13. The operating method of claim 12, wherein each capacitive touch block corresponds to the location signal.

14. The operating method of claim 9, wherein the second using status induction defines the input key area as a mouse touch pad.

15. The operating method of claim 9, wherein the using status induction switch being actively activated is performed by an opening and closing of a slide case panel.

16. The operating method of claim 9, wherein the using status induction switch being passively activated is performed by an on-and-off of a switch.

## Amended claims

### Amended claims in accordance with Rule 137(2) EPC.

**1.** A dual function operation input key module employed to a portable device, including:
an input key area (100), which includes a capacitive touch sensor (102);
an operation input setting unit (120), which sets the input key area (100) to operate in a first using status as a keypad, and a second using status as a mouse touch pad; and
a switch (130), selectively controlling the operation setting unit (120) to set the input key area (100) to operate in a first using status, and a second using status.

**2.** The dual function operation input key module of claim 1, wherein the input key area further includes a plurality of keys.

**3.** The dual function operation input key module of any one of claims 1-2, wherein the input key area further includes a key function switch unit to selectively switch function setting of the keys.

**4.** The dual function operation input key module of any one of claims 1-3, wherein each capacitive touch block corresponds to the location signal.

**5.** The dual function operation input key module of any one of claims 1-4, wherein the switch is performed by an opening and closing of a slide case panel.

**6.** The dual function operation input key module of any one of claims 1-5, wherein the switch is performed by an on-and-off of a switch.
